# FASCICULE DE BREVET EUROPEEN

(11) **EP 2 863 726 B1**
(45) Date de publication et mention de la délivrance du brevet: **10.08.2016**
(21) Numéro de dépôt: 13733343.1
(22) Date de dépôt: 05.06.2013
(51) Int. Cl.: A01B 63/10, A01D 34/66, A01B 59/06

(54) **DISPOSITIF D'ACCOUPLEMENT PERFECTIONNÉ ET MACHINE AGRICOLE COMPORTANT UN TEL DISPOSITIF**
VERBERSSERTE KOPPELEINRICHTUNG UND LANDWIRTSCHAFTMACHINE MIT EINER SOLCHEN EINRICHTUNG
IMPROVED COUPLING DEVICE AND AGRICULTUR MACHINE WITH SUCH A DEVICE

(30) Priorité: 25.06.2012 FR 1255985
(43) Date de publication de la demande: 29.04.2015
(73) Titulaire: KUHN S.A., 67700 Saverne (FR)
(72) Inventeur: HALTER, Cédric, 67310 Wasselonne (FR); WILHELM, Joël, 57820 Saint-Louis (FR)
(74) Mandataire: Esch, Esther Evelyne
(86) Numéro de dépôt international: PCT/FR2013/051275
(87) Numéro de publication internationale: WO 2014/001671

(56) Documents cités:
- EP-A1- 0 642 731
- EP-A1- 0 876 748
- EP-A1- 1 593 294
- EP-A2- 0 456 900

## Description

La présente invention se rapporte à un dispositif d'accouplement d'une machine agricole, notamment d'une faucheuse, comportant un support d'attelage pouvant être monté sur un attelage trois points d'un tracteur et au moins un bras articulé au support d'attelage et faisant saillie du support d'attelage dans une direction parallèle à la direction d'avancement du tracteur, lequel bras porte de manière articulée un châssis prévu pour porter un organe de travail.

Sur un dispositif d'accouplement de ce genre connu du document GB 2 013 466 A, le bras est surmonté d'une bielle articulée au support d'attelage et au châssis. Ainsi, la bielle et le bras forment, en projection sur un plan vertical parallèle à la direction d'avancement, un quadrilatère déformable. Pendant le travail, l'organe de travail se déplace sur le sol. Les irrégularités de celui-ci amènent le châssis portant l'organe de travail à se déplacer, au moins verticalement, afin de suivre le contour du terrain sur lequel la machine agricole évolue. En particulier dans le cas d'une faucheuse, l'organe de travail comportant par exemple des disques ou des tambours de coupe, forme un angle par rapport au sol appelé angle de piquage. Pendant le travail, cet angle peut être voisin de zéro, notamment avec des tambours de coupe, c'est-à-dire que ces derniers tournent dans un plan sensiblement parallèle au sol. Par contre, avec des disques de coupe, la partie frontale de ces derniers est légèrement plus basse que leur partie arrière. On parle d'angle de piquage positif. Aux endroits où le sol présente des creux, l'organe de travail et subséquemment le châssis se déplacent vers le bas par rapport au support d'attelage. L'angle de piquage évolue alors de sorte que la partie frontale de l'organe de travail soit nettement plus basse que sa partie arrière. Ceci permet à l'organe de travail de faucher efficacement les végétaux dans les endroits creux du terrain. A l'inverse, lorsque l'organe de travail rencontre une bosse et est donc amené à s'élever, l'angle de piquage évolue de sorte que la partie frontale de l'organe de travail soit plus haute que sa partie arrière. L'angle de piquage est alors négatif. Ceci permet à l'organe de travail de glisser sur l'obstacle sans être endommagé et sans souiller les végétaux fauchés avec de la terre.

De manière à garantir une bonne qualité de travail sur des terrains dont le profil est très irrégulier, il est souhaitable que le dispositif d'accouplement autorise l'organe de travail à se déplacer verticalement avec une grande amplitude. Sur le dispositif d'accouplement connu, la bielle et le bras ont des longueurs similaires et forment donc un quadrilatère proche d'un parallélogramme. Dans ce cas, l'angle de piquage évolue peu entre la position la plus haute de l'organe de travail par rapport au support d'attelage, et sa position la plus basse par rapport à ce dernier. La loi de variation de l'angle de piquage est alors déterminée de manière à privilégier plutôt les valeurs positives d'angle de piquage, ou bien plutôt les valeurs négatives. Avec un angle de piquage évoluant plutôt dans des valeurs positives, la qualité de travail sera dégradée sur les bosses, dans lesquelles l'organe de travail aura tendance à s'enterrer. A l'inverse, un angle de piquage orienté vers les valeurs négatives dégradera la qualité de travail dans les creux. La bielle et le bras pourraient également avoir des longueurs très différentes. La bielle pourrait notamment être sensiblement plus courte que le bras. Une telle géométrie autoriserait l'angle de piquage à évoluer entre deux valeurs extrêmes fortement distantes l'une de l'autre, afin que l'organe de travail ait une inclinaison optimale sur les bosses ou dans les creux importants.

Lors des déplacements verticaux de l'organe de travail, l'articulation entre le châssis et la bielle suit une trajectoire circulaire par rapport au support d'attelage. De fait, l'angle de piquage évolue à peu près linéairement en fonction de la hauteur de l'organe de travail par rapport au support d'attelage. Il s'ensuit que la bielle supérieure ne peut pas contrôler les mouvements du châssis afin que l'organe de travail ait toujours une inclinaison optimale, quel que soit le contour du terrain. Par ailleurs, sur le dispositif d'accouplement connu, il est nécessaire que la bielle et le bras aient une longueur réduite afin de conserver au dispositif d'accouplement un encombrement réduit suivant la direction d'avancement. En vue néanmoins d'assurer une amplitude de déplacement vertical importante de l'organe de travail, la bielle et le bras sont alors amenés à prendre beaucoup d'angle. Or, tous les efforts s'exerçant sur l'organe de travail sont repris par la bielle et le bras. De fait, les articulations de ces derniers avec le châssis et le support d'attelage subissent des contraintes importantes.

Un autre dispositif d'accouplement d'une machine agricole est connu du document EP 1 593 294 A1. Ce document décrit une faucheuse frontale comportant un support d'attelage auquel est articulé un bras. Celui-ci fait saillie du support d'attelage dans la direction d'avancement. A son extrémité avant, le bras porte deux bielles s'étendant vers l'arrière en direction du tracteur et reliées à un châssis portant un organe de travail. Une modification de la longueur de ces bielles entraîne une modification sensible de la longueur de la machine et/ou de la position du châssis par rapport au support d'attelage. La répartition des masses de la machine s'en trouve notablement affectée, ce qui a des effets néfastes sur le suivi du terrain et/ou la tenue des différentes articulations. En sus, il est difficile de modifier la position des points d'articulation des bielles sur le châssis dans des proportions importantes, étant donnée la proximité immédiate des organes de travail et des organes d'entraînement associés. Avec une telle machine, le concepteur se trouve confronté à des difficultés lorsqu'il souhaite en modifier la loi de variation de l'angle de piquage, car les possibilités géométriques qui le permettent sont limitées par les contraintes d'encombrement et de répartition des masses.

La présente invention a pour but de proposer un dispositif d'accouplement d'une machine agricole qui ne présente pas les inconvénients précités. Ce dispositif permet notamment d'obtenir une bonne adaptation au contour du terrain et de contrôler l'organe de travail en vue d'une bonne qualité de travail.

A cet effet, une importante caractéristique de l'invention réside dans le fait que le dispositif d'accouplement comporte en sus une bielle supérieure, une bielle inférieure et une bielle centrale, que chacune des bielle supérieure et bielle inférieure est articulée au support d'attelage et à la bielle centrale de manière à former, en projection sur un plan vertical parallèle à la direction d'avancement, un quadrilatère déformable, et que la bielle centrale est articulée au châssis.

Cette conception autorise l'angle de piquage à évoluer entre une valeur extrême négative et une valeur extrême positive qui soient fortement distantes l'une de l'autre. Ainsi, le dispositif d'accouplement garantit que l'organe de travail ait toujours une inclinaison optimale par rapport au terrain, sur des bosses ou dans des creux importants, et dans n'importe quelle position verticale intermédiaire. De plus, l'angle de piquage peut évoluer de manière non linéaire en fonction de la hauteur de l'organe de travail par rapport au support d'attelage. Le dispositif d'accouplement selon l'invention permet donc un contrôle fin de l'angle de piquage. En sus, le concepteur d'un tel dispositif d'accouplement dispose d'une grande liberté pour obtenir la loi de variation de l'angle de piquage souhaitée, puisqu'il lui suffit pour l'essentiel de changer la longueur des bielles ou la position des différentes articulations entre elles et/ou avec le châssis et/ou avec le support d'attelage. De tels changements peuvent être réalisés sans incidence notable sur l'encombrement total du dispositif d'accouplement et de la machine, et sur la répartition des masses de la machine. Enfin, les efforts s'exerçant sur l'organe de travail sont mieux répartis entre le bras et les différentes bielles, dont les articulations subissent des contraintes plus faibles, ce qui prolonge la durée de vie du dispositif d'accouplement. Une autre caractéristique importante de l'invention consiste en ce que le bras est relié au châssis par une articulation antérieure et que l'articulation antérieure est située au-dessus de la partie avant de l'organe de travail. Cette caractéristique autorise un débattement vertical important du châssis et de l'organe de travail tout en maintenant l'angle de pivotement du bras dans une plage réduite, d'où des efforts raisonnables dans les différentes articulations. En sus, un relèvement important du châssis et de l'organe de travail est favorisé par le fait que le bras présente une forme coudée vers le haut en partant du support d'attelage.

D'autres caractéristiques et avantages de l'invention ressortiront de la description ci-après avec référence aux dessins annexés qui représentent, à titre d'exemple non limitatif, plusieurs exemples de réalisation du dispositif d'accouplement selon l'invention.

Sur ces dessins :
- la figure 1 représente une vue latérale d'un exemple de réalisation d'un dispositif d'accouplement conforme à l'invention, dans une position de travail sur une partie plane du terrain ;
- la figure 2 représente une vue latérale du même exemple de réalisation, dans une position de travail sur une partie creuse du terrain ;
- la figure 3 représente une vue latérale du même exemple de réalisation, dans une position surélevée ;
- la figure 4 représente une vue latérale d'un autre exemple de réalisation d'un dispositif d'accouplement conforme à l'invention ;
- la figure 5 représente une vue en perspective d'un dispositif d'accouplement conforme à l'invention ;
- la figure 6 représente un schéma hydraulique de commande d'un dispositif d'accouplement conforme à l'invention.

Dans la description qui suit, les notions « inférieur », « supérieur », « bas », « haut » et « au-dessus » sont définies par rapport au sol, et les notions « avant », « arrière », « en aval », « antérieur », « postérieur », « gauche » et « droit » sont définies par rapport à la direction d'avancement (A).

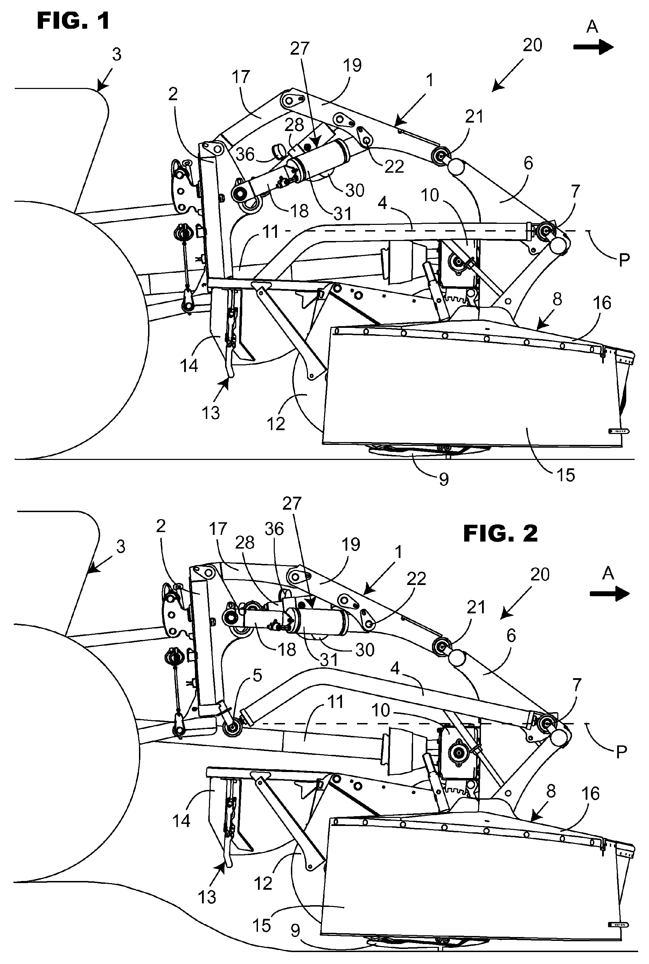

Tel qu'il est représenté sur la figure 1, le dispositif d'accouplement (1) comporte un support d'attelage (2) pouvant être monté sur un attelage trois points d'un tracteur (3) représenté seulement en partie. Le support d'attelage (2) se présente par exemple sous la forme d'une structure mécano-soudée. Il comporte dans sa partie inférieure deux tourillons conçus pour venir s'accrocher aux bras d'attelage inférieurs du tracteur (3). Dans sa partie supérieure, il comporte un ou plusieurs trous pouvant accueillir un axe pour la connexion à une bielle d'attelage supérieure du tracteur (3). Le dispositif d'accouplement (1) comporte également au moins un bras (4) articulé au support d'attelage (2). Le bras (4) fait saillie du support d'attelage (2) dans une direction parallèle à la direction d'avancement (A) du tracteur. Dans les exemples de réalisation, le bras (4) fait saillie du support d'attelage (2) dans la direction d'avancement (A). Le bras (4) est lié au support d'attelage (2) par une articulation postérieure (5) et porte un châssis (6) au moyen d'une articulation antérieure (7). Le châssis (6) est prévu pour supporter un organe de travail (8). Dans les exemples de réalisation, l'organe de travail (8) comporte des rotors de coupe tels que des disques ou des tambours munis de couteaux qui s'étendent au-delà de la périphérie des rotors. Ces derniers sont montés sur des paliers disposés à intervalles plus ou moins réguliers sur une barre de coupe (9), et sont, en fonctionnement, portés en rotation rapide au moyen d'un train de pignons incorporés dans un carter étanche contenant un lubrifiant tel que de l'huile. En étant mis en rotation, les couteaux viennent alors sectionner les végétaux s'élevant au-dessus du sol, tels que de l'herbe ou d'autres plantes fourragères. Le carter de la barre de coupe (9) se présente sous la forme d'un parallélépipède allongé. Le train de pignons est actionné par des moyens de transmission aptes à transmettre l'énergie nécessaire depuis le tracteur (3), ces moyens de transmission comprenant notamment un carter de renvoi (10) et un élément de transmission articulé (11). Dans les exemples de réalisation, le carter de renvoi (10) est situé au-dessus de l'organe de travail (8). Il est lié rigidement au châssis (6). Il serait néanmoins envisageable que le carter de renvoi (10) soit articulé au châssis (6) et que ses mouvements soient pilotés par exemple par un levier relié à d'autres éléments du dispositif d'accouplement (1). L'élément de transmission articulé (11) se présente sous la forme d'un arbre portant à une extrémité un cardan relié au carter de renvoi (10), et à son autre extrémité un moyen de connexion rapide à la prise de force du tracteur (3). Les moyens de transmission pourraient également comporter un moteur hydraulique ou électrique. L'organe de travail (8) peut également comporter des éléments de conditionnement (12) des végétaux fauchés disposés en aval de la barre de coupe (9). Ces éléments de conditionnement (12) sont portés par le châssis (6). Ils peuvent être formés par un ou plusieurs rotors portant par exemple des doigts ou des fléaux qui coopèrent avec une tôle et un peigne disposés au-dessus desdits rotors. Cette tôle et/ou ce peigne sont éventuellement réglables afin de modifier l'intensité du conditionnement. Les éléments de conditionnement (12) pourraient aussi être formés par des rouleaux comportant sur leur surface un motif en relief, par exemple un motif en chevrons. L'organe de travail (8) peut aussi comporter des éléments d'andainage (13), tels que des tôles à andain ou des tambours d'andainage disposés aux extrémités latérales de la barre de coupe (9). Les éléments d'andainage (13) pourraient aussi être formés par une ou plusieurs vis sans fin ou tapis convoyeurs disposés perpendiculairement à la direction d'avancement (A). Dans les exemples de réalisation, le châssis (6) porte des tôles à andains (14) qui permettent de diriger le flux de végétaux fauchés entre les roues avant du tracteur (3). Enfin, l'organe de travail (8) peut comporter un élément de protection (15). Ce denier entoure, au moins partiellement, la barre de coupe (9) et les éventuels éléments de conditionnement (12) et/ou d'andainage (13) décrits précédemment. L'élément de protection (15) comporte par exemple une toile souple qui s'étend verticalement de manière à former les faces avant, gauche et droite de l'élément de protection (15). Cette toile souple est assemblée, sur son pourtour supérieur, à un capot formant la face supérieure de l'élément de protection (15). Ce capot se compose d'une ou plusieurs tôles assemblées entre elles, et peut comprendre des portions en matière synthétique. Le capot est lié au châssis (6) et peut comprendre des parties repliables. L'organe de travail (8) comporte une partie avant (16) qui, dans l'exemple de réalisation des figures, est formée par la face supérieure avant de l'élément de protection (15). L'élément de protection (15) dissimule en partie le châssis (6). Sur la figure 1, on distingue une partie du châssis (6) qui émerge au-dessus de l'élément de protection (15), elle présente une forme de nez triangulaire qui porte l'articulation antérieure (7) reliant le châssis (6) au bras (4).

Il reste envisageable que le châssis (6) porte un organe de travail (8) d'une nature différente, comportant par exemple des rotors de fanage ou d'andainage des végétaux étalés sur le sol, ou des éléments de broyage ou encore une herse rotative, cette liste n'étant pas exhaustive. Le dispositif d'accouplement (1) est conçu pour faire partie d'une machine agricole qui peut ainsi être une machine de travail du sol ou de fenaison, notamment une faucheuse, par exemple une faucheuse frontale, ou encore une andaineuse ou une faneuse.

Le dispositif d'accouplement (1) selon l'invention comporte en sus une bielle supérieure (17), une bielle inférieure (18) et une bielle centrale (19). Chacune des bielle supérieure (17) et bielle inférieure (18) est articulée au support d'attelage (2) et à la bielle centrale (19) de manière à former, en projection sur un plan vertical parallèle à la direction d'avancement (A), un quadrilatère déformable. La bielle centrale (19) est articulée au châssis (6).

Les différentes articulations du dispositif d'accouplement (1) peuvent, de manière connue, être formées par des axes et/ou des rotules.

Dans les exemples de réalisation illustrés, le dispositif d'accouplement (1) est prévu pour faire partie d'une machine frontale. Le bras (4), la bielle supérieure (17) et la bielle inférieure (18) font saillie du support d'attelage (2) dans la direction d'avancement (A). De cette manière, le dispositif d'accouplement (1) s'étend dans la direction d'avancement (A) depuis le support d'attelage (2). Hormis l'élément de transmission articulé (11), il n'y a pas de composants présents en arrière du support d'attelage (2). Ceci rend le dispositif d'accouplement (1) et la machine (20) particulièrement compacts dans la direction d'avancement (A). De plus, le support d'attelage (2) peut être fortement rapproché de l'attelage trois points du tracteur (3), ce qui rend le centre de gravité du dispositif d'accouplement (1) et de la machine (20) proche du tracteur (3). On évite ainsi une trop forte charge sur l'essieu avant du tracteur (3).

Il serait toutefois envisageable que le bras (4) et au moins une des bielle supérieure (17) et bielle inférieure (18) fassent saillie du support d'attelage (2) dans une même direction parallèle à la direction d'avancement (A). Ceci sous-entend que le dispositif d'accouplement (1) pourrait être conçu de manière à être relié à un attelage trois points situé à l'arrière du tracteur (3). Dans ce cas, le support d'attelage (2) illustré sur les figures se résumerait en pratique à un bâti portant le bras (4), la bielle supérieure (17) et la bielle inférieure (18). Le bras (4) et les bielles (17 et 18) s'étendraient en avant du bâti. Le bâti serait prolongé vers l'avant par une poutre s'étendant par exemple au-dessus des bielles (17 et 18). Cette poutre serait à son tour, dans sa partie avant, reliée à un dispositif d'attelage conçu pour être relié à l'attelage trois points situé à l'arrière du tracteur (3).

De préférence, l'articulation antérieure (7) du bras (4) est, par rapport au sol, placée à une distance plus importante que l'articulation postérieure (5) quelle que soit la position du châssis (6) par rapport au support d'attelage (2). Ainsi, lorsque l'organe de travail (8) rencontre un obstacle tel qu'une pierre ou une bosse du terrain, les efforts s'exerçant sur lui, dans une direction opposée à la direction d'avancement (A), le forcent à s'élever au-dessus de l'obstacle. Ainsi, l'organe de travail (8) se déplace simultanément vers le haut et vers l'arrière. Cette géométrie avantageuse évite d'endommager l'organe de travail (8) ou d'autres éléments du dispositif d'accouplement (1) ou de la machine (20). Elle limite également le risque d'introduction de terre dans les végétaux fauchés. L'invention prévoit que cette disposition avantageuse des articulations antérieure et postérieure (5 et 7) l'une par rapport à l'autre soit respectée même dans la position la plus basse du châssis (6) par rapport au support d'attelage (2). Dans ce cas, une droite fictive (D) passant par lesdites articulations (5 et 7), orientée vers l'avant et vers le haut, forme par exemple un angle voisin de 1° avec l'horizontale.

De préférence, l'articulation antérieure (7) est située au-dessus de la partie avant (16) de l'organe de travail (8). Il en résulte que le bras (4) présente une longueur relativement importante. Ainsi qu'il ressort notamment de la figure 1, l'articulation antérieure (7) est située au-dessus de l'élément de protection (15) faisant partie de l'organe de travail (8). Sur cette figure qui montre la machine (20) de côté, il apparaît nettement que la longueur du bras (4) est proche de l'encombrement total de la machine (20) suivant la direction d'avancement (A). Cette caractéristique rend possible un débattement vertical important du châssis (6) et de l'organe de travail (8) tout en maintenant l'angle de pivotement du bras (4) autour de l'articulation postérieure (5) dans une plage réduite. Ainsi, la droite fictive (D), passant par les articulations antérieure (7) et postérieure (5), orientée vers l'avant et vers le haut, peut former avec l'horizontale un angle légèrement supérieur à zéro dans la position la plus basse du châssis (6) par rapport au support d'attelage (2) - voir l'angle de 1° cité précédemment à titre d'exemple - tandis que dans les autres positions du châssis (6), cette même droite formera un angle plus élevé mais néanmoins raisonnable, par exemple sensiblement inférieur à 45°. De cette manière, les efforts s'exerçant sur l'organe de travail (8), et qui sont en partie repris par le bras (4) et donc par les articulations antérieure (7) et postérieure (5), n'induisent pas des contraintes trop fortes dans ces dernières.

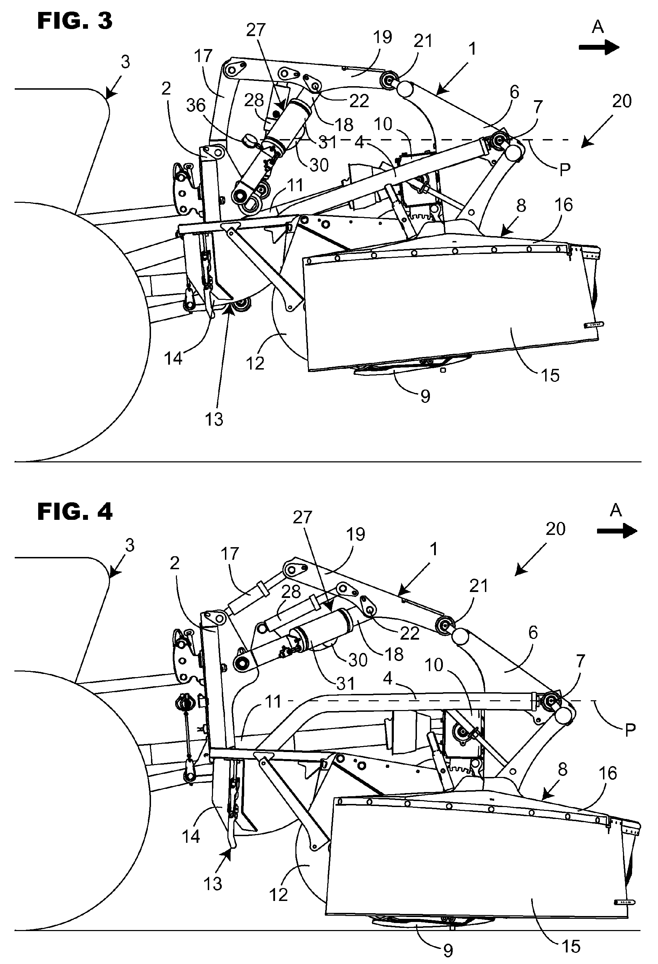

On comprend à la lumière des figures 2 et 3 que le châssis (6) et l'organe de travail (8), en s'élevant par rapport au support d'attelage (2), se rapprochent du bras (4). Sur la figure 3, le châssis (6) et l'organe de travail (8) sont représentés dans une position relevée par rapport au support d'attelage (2). Cette position pourrait être une position de transport de la machine (20), dans laquelle le châssis (6) est relevé au maximum, ou encore une position de travail sur une portion fortement surélevée du terrain, par exemple lorsque l'organe de travail (8) rencontre une bosse de grande hauteur.

Afin de conserver une amplitude de déplacement importante vers le haut, l'invention prévoit avantageusement que le bras (4) ait une forme coudée vers le haut en partant du support d'attelage. Cette caractéristique ressort nettement des figures. Elle prend tout son sens lorsque l'organe de travail (8) voit son encombrement suivant la direction d'avancement (A) sensiblement augmenté par des éléments de conditionnement (12) et d'andainage (13) situés en aval de la barre de coupe (9).

L'invention prévoit avantageusement que la bielle supérieure (17), la bielle inférieure (18) et la bielle centrale (19) s'étendent majoritairement au-dessus d'un plan (P) sensiblement horizontal passant par l'articulation antérieure (7). Cette caractéristique préserve la possibilité pour le châssis (6) de se déplacer vers le haut sur une grande distance, puisque l'espace entre le bras (4) coudé et le châssis (6) n'est pas encombré par lesdites bielles (17, 18 et 19). De plus, les moyens de transmission peuvent alors être logés entre le châssis (6) et les bielles (17, 18 et 19). Enfin, une telle disposition en hauteur des bielles (17, 18 et 19) les met à l'abri des projections de terre ou de fourrage pendant le travail qui pourraient nuire à la mobilité du dispositif d'accouplement (1) sur la durée.

Il ressort notamment de la figure 1 que la bielle supérieure (17) et la bielle inférieure (18) sont de préférence superposées. On évite ainsi que lorsque lesdites bielles (17 et 18) se déplacent par suite des mouvements du châssis (6), elles puissent se croiser, ce qui pourrait occasionner un blocage du dispositif d'accouplement (1).

On notera également que, de préférence, la bielle supérieure (17) et la bielle inférieure (18) sont, en partant du support d'attelage, orientées du bas vers le haut suivant la direction d'avancement (A). Sur les figures, elles sont donc orientées vers le haut et vers l'avant en partant du support d'attelage. Lorsque le châssis (6) se déplace verticalement, lesdites bielles (17 et 18) pivotent vers le haut et vers l'arrière. Elles suivent de fait le même mouvement que celui du bras (4). Ainsi, lorsque l'organe de travail (8) rencontre un obstacle, le dispositif d'accouplement (1), à l'exception du support d'attelage (2), se déplace vers le haut et vers l'arrière, tirant le châssis (6) dans la même direction. Cette géométrie avantageuse évite d'endommager l'organe de travail (8) ou d'autres éléments du dispositif d'accouplement (1) ou de la machine (20), et limite l'introduction de terre dans les végétaux fauchés.

Du reste, il est envisageable qu'au moins une des bielle supérieure (17) et bielle inférieure (18) soit réglable en longueur. Cette caractéristique couvre diverses formes de réalisation de la ou des bielles (17, 18) concernées. Une telle bielle réglable en longueur peut ainsi comporter des éléments vissés avec pas à gauche et pas à droite. Elle peut aussi se composer d'éléments pouvant glisser l'un dans l'autre et être immobilisés l'un par rapport à l'autre au moyen d'une broche susceptible de s'engager dans plusieurs trous de réglage. Enfin, une telle bielle pourrait prendre la forme d'un vérin hydraulique, pneumatique ou électrique. L'exemple d'un vérin hydraulique est illustré sur la figure 4.

Tel que cela est représenté sur les figures, la bielle centrale (19) est reliée au châssis (6) par une articulation centrale (21) et à la bielle inférieure (18) par une articulation inférieure (22). De préférence, une projection orthogonale de l'articulation centrale (21) sur une droite passant par l'articulation antérieure (7) et par l'articulation inférieure (22), est disposée entre l'articulation antérieure (7) et l'articulation inférieure (22). On relèvera sur la figure 1 que la distance séparant l'articulation antérieure (7) de l'articulation inférieure (22) est, en proportion de l'encombrement total du dispositif d'accouplement (1) suivant la direction d'avancement (A), relativement importante. L'articulation centrale (21) étant ainsi disposée, le concepteur du dispositif d'accouplement (1) peut la placer à l'endroit optimal permettant à l'angle de piquage de varier entre des valeurs positives et des valeurs négatives. Pendant le travail, cet angle est de préférence compris entre 2° et 4°. Aux endroits où le sol présente des creux, l'organe de travail (8) et subséquemment le châssis (6) se déplacent vers le bas par rapport au support d'attelage (2). L'angle de piquage évolue alors vers des valeurs nettement supérieures à zéro. Dans la position la plus basse du châssis (6) par rapport au support d'attelage (2), cet angle est de préférence compris entre 7° et 10°. Ceci permet à l'organe de travail (8) de faucher efficacement les végétaux dans les endroits creux du terrain. A l'inverse, lorsque l'organe de travail (8) rencontre une bosse et est donc amené à s'élever, l'angle de piquage devient négatif. Dans la position la plus haute du châssis (6) par rapport au support d'attelage (2), cet angle est de préférence compris entre -15° et -7°. Ceci permet à l'organe de travail (8) de glisser sur l'obstacle sans être endommagé et sans souiller les végétaux fauchés avec de la terre.

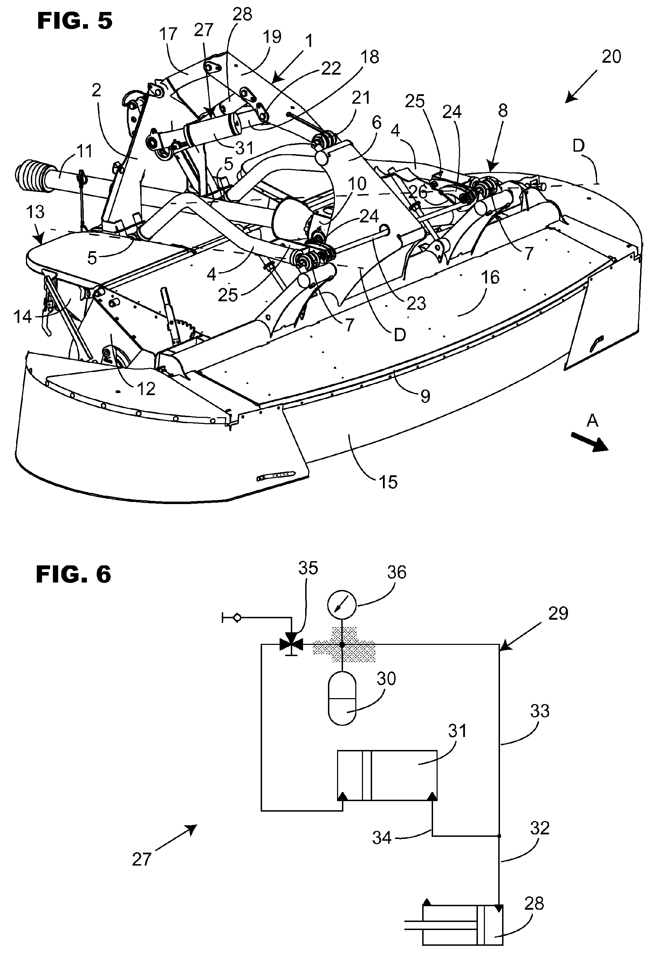

Ainsi qu'il ressort de la figure 5, le dispositif d'accouplement (1) comporte de préférence deux bras (4) disposés de part et d'autre de la bielle centrale (19). On distingue que les deux bras (4) sont placés de manière symétrique par rapport à la bielle centrale (19), mais cette caractéristique n'est pas obligatoire. Les deux bras (4) assurent l'essentiel du maintien du châssis (6) dans un plan horizontal, tandis que la bielle supérieure (17), la bielle inférieure (18) et la bielle centrale (19) donnent au châssis (6) l'angle de piquage souhaité pour les différentes positions verticales que peut prendre le châssis (6) par rapport au support d'attelage (2). En même temps, les efforts qui s'exercent sur le châssis (6) lors du travail, sont bien répartis entre les bras (4) et les différentes bielles (17, 18 et 19).

Selon une caractéristique avantageuse de l'invention, les deux bras (4) sont disposés de part et d'autre de la bielle centrale (19) de sorte que la distance séparant leurs articulations antérieures (7) respectives est plus grande que la distance séparant leurs articulations postérieures (5) respectives. Les lignes fictives (D) passant par les articulations antérieure (7) et postérieure (5) respectives des deux bras se croisent en un point virtuel situé en arrière du support d'attelage (2). On obtient ainsi une meilleure stabilité du châssis (6) lors des évolutions sur terrain irrégulier ou lorsque les efforts résistants, liés à l'action de l'organe de travail (8) et à l'avancement, ne sont pas répartis uniformément sur le châssis (6) dans une direction perpendiculaire à la direction d'avancement (A). On ajoutera que cet effet avantageux est renforcé par le fait que les lignes fictives (D) forment avec l'horizontale un angle réduit, compris par exemple - ainsi que décrit précédemment - entre 1° et 45°.

La stabilité du châssis (6) peut encore être améliorée en prévoyant que la distance séparant les articulations antérieures (7) soit au moins égale au quart de la largeur de travail totale de l'organe de travail (8), cette dernière se définissant comme la largeur de la portion de terrain travaillée lorsque l'organe de travail (8) se déplace dans la direction d'avancement (A). Cette caractéristique limite la tendance du châssis (6) à pivoter autour d'un axe vertical - notamment du fait des jeux existants dans les diverses articulations - lorsque les efforts qu'il reçoit sont majoritairement tantôt sur sa gauche, tantôt sur sa droite.

Sur la figure 5, la distance séparant les articulations antérieures (7) est comprise entre un tiers et deux tiers de la largeur de travail totale de l'organe de travail (8).

De préférence, le dispositif d'accouplement (1) comporte une barre de torsion (23) reliée à chacun des bras (4), et la barre de torsion (23) s'étend de l'une vers l'autre des articulations antérieures (7). La barre de torsion (23) comporte à chacune de ses extrémités une portion cannelée qui coopère avec un levier (24). Une tôle de fixation (25) est solidaire du bras (4) correspondant. Le levier (24) est relié à cette tôle de fixation (25) par une articulation de préférence sensiblement alignée avec l'articulation antérieure (7) correspondante. De cette manière, le levier (24) peut pivoter autour d'un axe sensiblement confondu avec l'axe longitudinal de la barre de torsion (23). Dans sa partie arrière, le levier (24) est articulé à une biellette (26). Celle-ci s'étend sous le levier (24) en direction de la barre de torsion (23) à laquelle la biellette (26) est également articulée. La biellette (26) est réglable en longueur. De cette manière, une variation de longueur de la biellette (26) permet d'ajuster le couple de torsion que le levier (24) exerce sur la barre de torsion (23). La barre de torsion (23) est donc précontrainte de manière ajustable. L'articulation centrale (21) ainsi que les articulations antérieures (7) et postérieures (5) sont de préférence formées par des rotules. Elles autorisent donc le châssis (6) à pivoter autour d'un axe orienté dans la direction d'avancement (A), lorsque l'organe de travail (8) évolue sur un terrain irrégulier. Ce mouvement de pivotement du châssis (6) entraîne une torsion de la barre de torsion (23), laquelle par réaction freine les mouvements du châssis (6), à la manière d'une barre antiroulis. Une modification de la précontrainte de la barre de torsion (23) permet d'ajuster l'intensité du freinage des mouvements. Le châssis (6) peut être plus lourd d'un côté que de l'autre, ou encore être placé de manière dissymétrique par rapport à la bielle centrale (19). Dans ce cas, la précontrainte est ajustée au moyen de la ou des biellettes (26) de sorte qu'au repos, le châssis (6) conserve une orientation parallèle au sol.

Selon une caractéristique avantageuse de l'invention, le dispositif d'accouplement (1) comporte un dispositif de commande (27). Celui-ci réalise à la fois l'allégement du dispositif d'accouplement (1) et du châssis (6) au travail, l'amortissement des déplacements du dispositif d'accouplement (1) et du châssis (6) au travail, et le déplacement de l'organe de travail (8) par rapport au support d'attelage (2) entre une position de travail, une position de manoeuvre et une position de transport. Au travail, l'allégement a pour but de limiter la pression que l'organe de travail (8) exerce sur le sol lorsqu'il se déplace. On évite ainsi que l'organe de travail (8) ne gratte trop le sol ou ne s'y enfonce de trop, ce qui le préserve d'une usure excessive et limite la résistance à l'avancement de la machine (20). Dans le cas d'une machine de récolte telle qu'une faucheuse, une andaineuse ou une faneuse, l'allégement évite également d'introduire trop d'impuretés - terre, cailloux - dans les végétaux travaillés. Le dispositif de commande (27) réalise également une fonction d'amortissement de manière à éviter que l'organe de travail (8) ne rebondisse sur les obstacles. Enfin, l'organe de travail (8) peut être déplacé par rapport au support d'attelage (2) entre une position de travail, dans laquelle l'organe de travail (8) repose au sol, une position de manoeuvre, dans laquelle l'organe de travail (8) est relevé à quelque distance du sol pour passer au-dessus d'obstacles ou de végétaux déjà travaillés, et une position de transport, dans laquelle l'organe de travail (8) est relevé au maximum pour un transport aisé de la machine (20) sur route ouverte ou d'une parcelle à l'autre.

De préférence, le dispositif de commande (27) comporte au moins un vérin (28). Celui-ci peut être articulé entre le support d'attelage (2) et l'une des bielle inférieure (18), bielle supérieure (17) et bielle centrale (19), ainsi que représenté sur les figures 1 à 3. Tel que représenté sur la figure 4, le vérin (28) peut aussi être articulé entre deux des bielle inférieure (18), bielle supérieure (17) et bielle centrale (19). Le vérin (28) peut être hydraulique, pneumatique ou électrique. Sur les figures, un seul vérin (28) hydraulique est prévu, il est articulé entre le support d'attelage (2) et la bielle centrale (19). Le vérin (28) est ainsi, sur la plus grande partie de sa longueur, avantageusement logé dans l'espace délimité par les différentes bielles (17, 18 et 19), ce qui préserve la compacité du dispositif d'accouplement (1). De plus, le vérin (28) utilisé est de longueur relativement faible, puisque proportionné aux longueurs des bielles (17, 18 et 19), ces dernières étant plutôt courtes au regard des dimensions générales du dispositif d'accouplement (1) et du châssis (6). Notons également que l'angle de pivotement réduit du bras (4) autorise le vérin (28) à travailler sur une course réduite, ce qui va dans le sens d'un vérin de faible longueur. Il est donc possible d'utiliser un seul vérin (28) de faibles dimensions dont le coût est peu élevé. Ainsi disposé, le vérin (28) libère le champ de vision pour le conducteur, l'espace situé au-dessus des bras (4) gauche et droit étant inoccupé. Ceci ressort clairement de la figure 5. Enfin, l'usage d'un seul vérin (28) simplifie la réalisation du dispositif de commande (27) en réduisant le nombre de tuyaux, distributeurs et raccords.

Tel que cela est représenté sur la figure 6, un circuit (29) de fluide relie le vérin (28), un accumulateur (30) et un cylindre de relevage (31) entre eux. L'accumulateur (30) comporte une sphère dont le volume intérieur est séparé en deux chambres par une membrane souple, une chambre contenant un gaz sous pression tel que de l'azote, l'autre chambre contenant de l'huile. Le cylindre de relevage (31) se présente sous la forme d'un fût dans lequel peut coulisser un piston. Le piston délimite ainsi deux chambres de volume variable. Le circuit (29) comprend un conduit (32) qui se divise en une première branche (33) et en une deuxième branche (34). Le vérin (28), de préférence à simple effet, est alimenté en huile par le conduit (32) et la première branche (33) est reliée à un robinet trois voies (35). Cette première branche (33) porte l'accumulateur (30) ainsi qu'un manomètre (36). La deuxième branche (34) est reliée à une chambre du cylindre de relevage (31), l'autre chambre du cylindre de relevage (31) étant reliée au robinet trois voies (35). Le robinet trois voies (35) est relié à un distributeur hydraulique, non représenté, pour l'alimentation en huile depuis le tracteur (3). Pour déplacer le châssis (6) par rapport au support d'attelage (2), le robinet trois voies (35) est orienté de manière à autoriser l'huile à circuler entre le distributeur et le cylindre de relevage (31) uniquement. Une position du distributeur permet alors d'envoyer de l'huile dans le cylindre de relevage (31) dont le piston se translate et déplace un volume d'huile déterminé vers le vérin (28). Ceci provoque le relèvement du châssis (6) par rapport au support d'attelage (2). Une autre position du distributeur permet de renvoyer l'huile du cylindre de relevage (31) vers un réservoir, et le châssis (6) s'abaisse sous son propre poids. Le robinet trois voies (35) peut être orienté de manière à autoriser l'huile à circuler entre le distributeur et la première branche (33) uniquement. Par action sur le distributeur, de l'huile peut alors être envoyée dans la première branche (33). En raison de l'orientation du robinet trois voies (35), le piston du cylindre de relevage (31) reste immobile, d'où un accroissement de la pression dans l'accumulateur (30) et dans le vérin (28) et donc une augmentation de l'allégement. Lorsqu'au travail, le vérin (28) voit sa longueur varier par suite des mouvements du châssis (6), il déplace un volume de fluide assez faible car la longueur et la course du vérin (28) sont réduites. L'amortissement peut donc conserver une valeur sensiblement constante avec un accumulateur (30) de taille raisonnable.

Il est bien évident que l'invention n'est pas limitée aux exemples de réalisation décrits ci-dessus et représentés sur les figures annexées. Des modifications restent possible dans la limite définie par les revendications.

## Revendications

1. Dispositif d'accouplement (1) d'une machine (20) agricole, notamment d'une faucheuse, comportant un support d'attelage (2) pouvant être monté sur un attelage trois points d'un tracteur (3) et au moins un bras (4) articulé au support d'attelage (2) et faisant saillie du support d'attelage (2) dans une direction parallèle à la direction d'avancement (A) du tracteur (3), lequel bras (4) porte de manière articulée un châssis (6) prévu pour porter un organe de travail (8), ***caractérisé en ce que*** le dispositif d'accouplement (1) comporte en sus une bielle supérieure (17), une bielle inférieure (18) et une bielle centrale (19), que chacune des bielle supérieure (17) et bielle inférieure (18) est articulée au support d'attelage (2) et à la bielle centrale (19) de manière à former, en projection sur un plan vertical parallèle à la direction d'avancement (A), un quadrilatère déformable, et que la bielle centrale (19) est articulée au châssis (6).

2. Dispositif d'accouplement selon la revendication 2, ***caractérisé en ce que*** le bras (4) et au moins une des bielle supérieure (17) et bielle inférieure (18) font saillie du support d'attelage (2) dans une même direction parallèle à la direction d'avancement (A).

3. Dispositif d'accouplement selon la revendication 1 ou 2, ***caractérisé en ce que*** le bras (4) et/ou au moins une des bielle supérieure (17) et bielle inférieure (18) font saillie du support d'attelage (2) dans la direction d'avancement (A).

4. Dispositif d'accouplement selon l'une quelconque des revendications 1 à *3, **caractérisé en ce que*** le bras (4) est relié au châssis (6) par une articulation antérieure (7) et au support d'attelage (2) par une articulation postérieure (5), et que l'articulation antérieure (7) est, par rapport au sol, placée à une distance plus importante que l'articulation postérieure (5), quelle que soit la position du châssis (6) par rapport au support d'attelage (2).

5. Dispositif d'accouplement selon l'une quelconque des revendications 1 à *4, **caractérisé en ce que*** l'organe de travail (8) comporte une partie avant (16), que le bras (4) est relié au châssis (6) par une articulation antérieure (7) et que l'articulation antérieure (7) est située au-dessus de la partie avant (16).

6. Dispositif d'accouplement selon l'une quelconque des revendications 1 à *5, **caractérisé en ce que*** le bras (4) présente une forme coudée vers le haut en partant du support d'attelage (2).

7. Dispositif d'accouplement selon l'une quelconque des revendications 4 à *6, **caractérisé en ce que*** la bielle supérieure (17), la bielle inférieure (18) et la bielle centrale (19) s'étendent majoritairement au-dessus d'un plan (P) sensiblement horizontal passant par l'articulation antérieure (7).

8. Dispositif d'accouplement selon l'une quelconque des revendications 1 à *7, **caractérise en ce que*** la bielle supérieure (17) et la bielle inférieure (18) sont superposées.

9. Dispositif d'accouplement selon la revendication 8, ***caractérise en ce que*** la bielle supérieure (17) et la bielle inférieure (18) sont, en partant du support d'attelage (2), orientées du bas vers le haut suivant la direction d'avancement (A).

10. Dispositif d'accouplement selon l'une quelconque des revendications 1 à *9, **caractérise en ce qu'**au* moins une des bielle supérieure (17) et bielle inférieure (18) est réglable en longueur.

11. Dispositif d'accouplement selon l'une quelconque des revendications 4 à 10, ***caractérise en ce que*** la bielle centrale (19) est reliée au châssis (6) par une articulation centrale (21) et à la bielle inférieure (18) par une articulation inférieure (22), et qu'une projection orthogonale de l'articulation centrale (21) sur une droite passant par l'articulation antérieure (7) et par l'articulation inférieure (22), est disposée entre l'articulation antérieure (7) et l'articulation inférieure (22).

12. Dispositif d'accouplement selon l'une quelconque des revendications 4 à 11, ***caractérise** en **ce qu**'il* comporte deux bras (4) disposés de part et d'autre de la bielle centrale (19), de sorte que la distance séparant leurs articulations antérieures (7) respectives est plus grande que la distance séparant leurs articulations postérieures (5) respectives.

13. Dispositif d'accouplement selon la revendication 12, ***caractérise en ce que*** la distance séparant les articulations antérieures (7) est au moins égale au quart de la largeur de travail totale de l'organe de travail (8).

14. Dispositif d'accouplement selon la revendication 13, ***caractérisé en ce que*** la distance séparant les articulations antérieures (7) est comprise entre un tiers et deux tiers de la largeur de travail totale de l'organe de travail (8).

15. Dispositif d'accouplement selon l'une quelconque des revendications 12 à 14, ***caractérisé** en **ce qu***'il comporte une barre de torsion (23) reliée à chacun des bras (4), et que la barre de torsion (23) s'étend de l'une vers l'autre des articulations antérieures (7).

16. Dispositif d'accouplement selon l'une quelconque des revendications 1 à 15, ***caractérisé en ce qu***'il comporte un dispositif de commande (27) qui réalise à la fois l'allégement du dispositif d'accouplement (1) et du châssis (6) au travail, l'amortissement des déplacements du dispositif d'accouplement (1) et du châssis (6) au travail, et le déplacement de l'organe de travail (8) par rapport au support d'attelage (2) entre une position de travail, une position de manoeuvre et une position de transport.

17. Dispositif d'accouplement selon la revendication 16, ***caractérisé en ce que*** le dispositif de commande (27) comporte au moins un vérin (28) articulé entre le support d'attelage (2) et l'une des bielle inférieure (18), bielle supérieure (17) et bielle centrale (19).

18. Dispositif d'accouplement selon la revendication 16, ***caractérisé en ce que*** le dispositif de commande (27) comporte au moins un vérin (28) articulé entre deux des bielle inférieure (18), bielle supérieure (17) et bielle centrale (19).

19. Dispositif d'accouplement selon la revendication 17 ou 18, ***caractérisé** en ce **qu***'un circuit (29) de fluide relie le vérin (28), un accumulateur (30) et un cylindre de relevage (31) entre eux et que la pression du fluide dans le circuit (29) est réglable.

20. Machine (20) agricole, ***caractérisée en ce qu'**el*le comporte un dispositif d'accouplement (1) selon l'une quelconque des revendications 1 à 19.

21. Machine (20) agricole selon la revendication 20, ***caractérisée en ce que*** c'est une faucheuse, notamment une faucheuse frontale.

## Patentansprüche

1. Kupplungsvorrichtung (1) einer landwirtschaftlichen Maschine (20), insbesondere eines Mähers mit einem Kupplungsauflager (2), das an einer Dreipunktkupplung eines Traktors (3) befestigt werden kann, und mindestens einem Arm (4), der am Kupplungsauflager (2) angelenkt ist und vom Kupplungsauflager (2) in eine zur Vorschubrichtung (A) des Traktors (3) parallele Richtung vorsteht, wobei der Arm (4) in angelenkter Art einen Rahmen (6) trägt, der zum Tragen eines Arbeitselements (8) vorgesehen ist, ***dadurch gekennzeichnet*, dass** die Kupplungsvorrichtung (1) zusätzlich eine obere Stange (17), eine untere Stange (18) und eine mittlere Stange (19) umfasst, dass jede der oberen (17) und unteren Stange (18) am Kupplungsauflager (2) und an der mittleren Stange (19) angelenkt ist, um in einer Projektion auf eine zur Vorschubrichtung (A) parallele vertikale Ebene, ein verformbares Viereck zu bilden, und dass die mittlere Stange (19) am Rahmen (6) angelenkt ist.

2. Kupplungsvorrichtung nach Anspruch 2, ***dadurch gekennzeichnet*, dass** der Arm (4) und mindestens eine der oberen Stange (17) und unteren Stange (18) vom Kupplungsauflager (2) in eine gleiche, zur Vorschubrichtung (A) parallele Richtung vorstehen.

3. Kupplungsvorrichtung nach Anspruch 1 oder 2, ***dadurch gekennzeichnet*, *dass*** der Arm (4) und/oder mindestens eine der oberen Stange (17) und unteren Stange (18) vom Kupplungsauflager (2) in Vorschubrichtung (A) vorstehen.

4. Kupplungsvorrichtung nach irgend einem der Ansprüche 1 bis 3, ***dadurch gekennzeichnet,* dass** der Arm (4) mit dem Rahmen (6) durch ein vorderes Gelenk (7) und mit dem Kupplungsauflager (2) durch ein hinteres Gelenk (5) verbunden ist, und dass das vordere Gelenk (7), in Bezug auf den Boden, in einem größeren Abstand angeordnet ist als das hintere Gelenk (5), wie auch immer die Stellung des Rahmens (6) in Bezug auf das Kupplungsauflager (2) sein mag.

5. Kupplungsvorrichtung nach irgend einem der Ansprüche 1 bis 4, ***dadurch gekennzeichnet,* dass** das Arbeitselement (8) einen Vorderteil (16) umfasst, dass der Arm (4) mit dem Rahmen (6) durch ein vorderes Gelenk (7) verbunden ist und dass sich das vordere Gelenk (7) über dem Vorderteil (16) befindet.

6. Kupplungsvorrichtung nach irgend einem der Ansprüche 1 bis 5, ***dadurch gekennzeichnet*, dass** der Arm (4) eine nach oben abgewinkelte Form ausgehend vom Kupplungsauflager (2) aufweist.

7. Kupplungsvorrichtung nach irgend einem der Ansprüche 4 bis 6, ***dadurch gekennzeichnet,* dass** sich die obere Stange (17), die untere Stange (18) und die mittlere Stange (19) hauptsächlich über einer im Wesentlichen horizontalen Ebene (P) erstrecken, die durch das vordere Gelenk (7) verläuft.

8. Kupplungsvorrichtung nach irgend einem der Ansprüche 1 bis 7, ***dadurch gekennzeichnet*, dass** die obere Stange (17) und die untere Stange (18) übereinander gelagert sind.

9. Kupplungsvorrichtung nach Anspruch 8, ***dadurch gekennzeichnet*, dass** die obere Stange (17) und die untere Stange (18), ausgehend vom Kupplungsauflager (2), von unten nach oben gemäß der Vorschubrichtung (A) ausgerichtet sind.

10. Kupplungsvorrichtung nach irgend einem der Ansprüche 1 bis 9, ***dadurch gekennzeichnet*, dass** mindestens eine der oberen Stange (17) und unteren Stange (18) längenverstellbar sind.

11. Kupplungsvorrichtung nach irgend einem der Ansprüche 4 bis 10, ***dadurch gekennzeichnet*, dass** die mittlere Stange (19) mit dem Rahmen (6) durch ein mittleres Gelenk (21) und mit der unteren Stange (18) durch ein unteres Gelenk (22) verbunden ist, und dass eine orthogonale Projektion des mittleren Gelenks (21) auf eine Gerade, die durch das vordere Gelenk (7) und durch das untere Gelenk (22) verläuft, zwischen dem vorderen Gelenk (7) und dem unteren Gelenk (22) angeordnet ist.

12. Kupplungsvorrichtung nach irgend einem der Ansprüche 4 bis 11, ***dadurch gekennzeichnet*, dass** sie zwei Arme (4) umfasst, die auf jeder Seite der mittleren Stange (19) so angeordnet sind, dass der Abstand, der ihre jeweiligen vorderen Gelenke (7) trennt, größer ist als der Abstand, der ihre jeweiligen hinteren Gelenke (5) trennt.

13. Kupplungsvorrichtung nach Anspruch 12, ***dadurch gekennzeichnet*, dass** der Abstand, der die vorderen Gelenke (7) trennt, mindestens gleich groß ist wie ein Viertel der Gesamtarbeitsbreite des Arbeitselements (8).

14. Kupplungsvorrichtung nach Anspruch 13, ***dadurch gekennzeichnet,* dass** der Abstand, der die vorderen Gelenke (7) trennt, zwischen einem Drittel und zwei Dritteln der Gesamtarbeitsbreite des Arbeitselements (8) beträgt.

15. Kupplungsvorrichtung nach irgend einem der Ansprüche 12 bis 14, ***dadurch gekennzeichnet*, dass** sie einen Torsionsstab (23) umfasst, der mit jedem Arm (4) verbunden ist, und dass sich der Torsionsstab (23) von einem zum anderen der vorderen Gelenke (7) erstreckt.

16. Kupplungsvorrichtung nach irgend einem der Ansprüche 1 bis 15, ***dadurch gekennzeichnet*, dass** sie eine Steuervorrichtung (27) umfasst, die gleichzeitig die Entlastung der Kupplungsvorrichtung (1) und des Rahmens (6) bei der Arbeit, die Dämpfung der Bewegungen der Kupplungsvorrichtung (1) und des Rahmens (6) bei der Arbeit und die Bewegung des Arbeitselements (8) in Bezug auf das Kupplungsauflager (2) zwischen einer Arbeitsstellung, einer Betätigungsstellung und einer Transportstellung ausführt.

17. Kupplungsvorrichtung nach Anspruch 16, ***dadurch gekennzeichnet*, dass** die Steuervorrichtung (27) mindestens einen Zylinder (28) umfasst, der zwischen dem Kupplungsauflager (2) und einer der unteren Stange (18), oberen Stange (17) und mittleren Stange (19) angelenkt ist.

18. Kupplungsvorrichtung nach Anspruch 16, ***dadurch gekennzeichnet*, dass** die Steuervorrichtung (27) mindestens einen Zylinder (28) umfasst, der zwischen zwei der unteren Stange (18), oberen Stange (17) und mittleren Stange (19) angelenkt ist.

19. Kupplungsvorrichtung nach Anspruch 17 oder 18, ***dadurch gekennzeichnet*, dass** ein Fluidkreis (29) den Zylinder (28), einen Speicher (30) und einen Hubzylinder (31) miteinander verbindet und dass der Druck des Fluids im Fluidkreis (29) einstellbar ist.

20. Landwirtschaftliche Maschine (20), ***dadurch gekennzeichnet*, dass** sie eine Kupplungsvorrichtung (1) nach irgend einem der Ansprüche 1 bis 19 umfasst.

21. Landwirtschaftliche Maschine (20) nach Anspruch 20, ***dadurch gekennzeichnet*, dass** es ein Mäher, insbesondere ein Frontmäher, ist.

## Claims

1. Coupling device (1) for an agricultural machine (20), in particular a mower, including a coupling support (2) that can be mounted on a three-point hitch of a tractor (3) and at least one arm (4) articulated to the coupling support (2) and protruding from the coupling support (2) in a direction parallel to the direction of advance (A) of the tractor (3), the said arm (4) carrying, in an articulated manner, a chassis (6) provided to carry a work element (8), ***characterized in* that** the coupling device (1) additionally comprises an upper connecting-rod (17), a lower connecting-rod (18) and a central connecting-rod (19), that each of the upper connecting-rod (17) and lower connecting-rod (18) is articulated to the coupling support (2) and to the central connecting-rod (19) so as to form, projected in a vertical plane parallel to the direction of advance (A), a deformable quadrilateral, and that the central connecting-rod (19) is articulated to the chassis (6).

2. Coupling device according to claim 2, ***characterized in* that** the arm (4) and at least one of the upper connecting-rod (17) and lower connecting-rod (18) protrude from the coupling support (2) in a same direction parallel to the direction of advance (A).

3. Coupling device according to claim 1 or 2, ***characterized in* that** the arm (4) and/or at least one of the upper connecting-rod (17) and lower connecting-rod (18) protrude from the coupling support (2) in the direction of advance (A).

4. Coupling device according to any one of claims 1 to 3, ***characterized in* that** the arm (4) is connected to the chassis (6) by a front articulation (7) and to the coupling support (2) by a rear articulation (5), and **in that** the front articulation (7) is, relative to the ground, placed at a greater distance than the rear articulation (5) irrespective of the position of the chassis (6) relative to the coupling support (2).

5. Coupling device according to any one of claims 1 to 4, ***characterized in* that** the work element (8) comprises a front part (16), that the arm (4) is connected to the chassis (6) by a front articulation (7) and that the front articulation (7) is situated above the front part (16).

6. Coupling device according to any one of claims 1 to 5, ***characterized in* that** the arm (4) has an upwardly bent shape starting from the coupling support (2).

7. Coupling device according to any one of claims 4 to 6, ***characterized in* that** the upper connecting-rod (17), the lower connecting-rod (18) and the central connecting-rod (19) extend mostly above a substantially horizontal plane (P) passing through the front articulation (7).

8. Coupling device according to any one of claims 1 to 7, ***characterized in* that** the upper connecting-rod (17) and the lower connecting-rod (18) are superposed.

9. Coupling device according to claim 8, ***characterized in* that** the upper connecting-rod (17) and the lower connecting-rod (18) are, starting from the coupling support (2), oriented from the bottom towards the top following the direction of advance (A).

10. Coupling device according to any one of claims 1 to 9, ***characterized in* that** at least one of the upper connecting-rod (17) and the lower connecting-rod (18) is adjustable in length.

11. Coupling device according to any one of claims 4 to 10, ***characterized in* that** the central connecting-rod (19) is connected to the chassis (6) by a central articulation (21) and to the lower connecting-rod (18) by a lower articulation (22), and **in that** an orthogonal projection of the central articulation (21) on a line passing through the front articulation (7) and the lower articulation (22), is arranged between the front articulation (7) and the lower articulation (22).

12. Coupling device according to any one of claims 4 to 11, ***characterized in* that** it comprises two arms (4) which are arranged on either side of the central connecting-rod (19), such that the distance separating their respective front articulations (7) is greater than the distance separating their respective rear articulations (5).

13. Coupling device according to claim 12, ***characterized in* that** the distance separating the front articulations (7) is at least equal to one quarter of the total working width of the work element (8).

14. Coupling device according to claim 13, ***characterized in* that** the distance separating the front articulations (7) is comprised between one third and two thirds of the total working width of the work element (8).

15. Coupling device according to any one of claims 12 to 14, ***characterized in* that** it comprises a torsion bar (23) connected to each of the arms (4), and that the torsion bar (23) extends from one of the front articulations (7) toward the other.

16. Coupling device according to any one of claims 1 to 15, ***characterized in* that** it comprises a control device (27) that simultaneously achieves lightening of the coupling device (1) and of the chassis (6) during work, damping of the movements of the coupling device (1) and of the chassis (6) during work, and movement of the work element (8) relative to the coupling support (2) between a work position, a maneuvering position and a transport position.

17. Coupling device according to claim 16, ***characterized in* that** the control device (27) comprises at least one jack (28) articulated between the coupling support (2) and one of the lower connecting-rod (18), upper connecting-rod (17) and central connecting-rod (19).

18. Coupling device according to claim 16, ***characterized in* that** the control device (27) comprises at least one jack (28) articulated between two of the lower connecting-rod (18), upper connecting-rod (17) and central connecting-rod (19).

19. Coupling device according to claim 17 or 18, ***characterized in* that** a fluid circuit (29) connects the jack (28), an accumulator (30) and a lifting cylinder (31) to each other and that the pressure of the fluid in the circuit (29) is adjustable.

20. Agricultural machine (20), ***characterized in* that** it comprises a coupling device (1) according to any one of claims 1 to 19.

21. Agricultural machine (20) according to claim 20, ***characterized in* that** it is a mower, in particular a front mower.
